# FASCICULE DE BREVET EUROPEEN

(11) **EP 2 162 288 B1**
(45) Date de publication et mention de la délivrance du brevet: **17.07.2013**
(21) Numéro de dépôt: 08805680.9
(22) Date de dépôt: 22.04.2008
(51) Int. Cl.: B32B 17/10, E04F 13/14, E06B 3/54

(54) **AGENCEMENT DE FIXATION DE VITRAGE DE SECURITE**
ANORDNUNG ZUR BEFESTIGUNG EINES SICHERHEITSGLASTEILS
ARRANGEMENT FOR ATTACHING A SAFETY GLAZING ELEMENT

(30) Priorité: 09.07.2007 FR 0756362
(43) Date de publication de la demande: 17.03.2010
(73) Titulaire: Renault S.A.S., 92100 Boulogne-Billancourt (FR)
(72) Inventeur: PERRIN, Vincent, F-91530 Sermaise (FR); ROUFFIGNAC, Eric, F-28130 Saint-martin-de-nigelles (FR)
(74) Mandataire: Fantin, Teddy
(86) Numéro de dépôt international: PCT/FR2008/050722
(87) Numéro de publication internationale: WO 2009/007554

(56) Documents cités:
- WO-A-96/26336
- WO-A-2007/042716

## Description

La présente invention se rapporte à un vitrage comprenant un film de sécurité. Elle concerne en particulier un agencement pour la fixation d'un vitrage de bâtiment par exemple une vitrine de magasin, ou une façade vitrée.

Le document WO9626336 A1 décrit un vitrage de bâtiment possédant une vitre dont une face est totalement revêtue d'un film de sécurité. Le film de sécurité permet d'obtenir un vitrage anti-intrusion ou anti-rupture. Dans ce document, le vitrage est fixé au bâtiment par l'intermédiaire d'un élément support sur lequel est collée la face du vitrage revêtue du film.

Cependant le collage du vitrage par l'intermédiaire du film de sécurité détériore la qualité de fixation du vitrage car la vitre n'est pas directement collée au support.

Le document WO2007042716 A1 propose un vitrage possédant une vitre revêtue d'un film de sécurité, la vitre présentant une région périphérique qui n'est pas recouverte par le film permettant ainsi sa fixation directement sur un élément support lié au bâtiment sans en détériorer son maintien.

Cependant, le film de sécurité n'est pas maintenu à l'élément support et son efficacité est amoindrie.

Le but de l'invention est de fournir un vitrage comprenant une vitre avec un film de sécurité permettant d'assurer la fixation de la vitre sur un élément support du bâtiment, tout comme la fixation de la périphérie du film, sans que la fixation du film ne détériore la qualité de la fixation de la vitre sur l'élément support.

Dans ce but, l'invention propose un agencement de fixation d'un vitrage de sécurité dans lequel une bordure à la périphérie de la vitre est libre de film de manière qu'une limite périphérique du film soit située à distance du bord de la vitre, la distance séparant le bord de la vitre et la limite du film étant alternativement variable.

Selon d'autres caractéristiques de l'invention, des premières portions périphériques du film peuvent être en contact avec une bande d'adhésif et des secondes portions périphériques du film peuvent être libres par rapport à la bande d'adhésif.

Les premières et secondes portions périphériques du film peuvent être alternativement adjacentes.

La limite du film peut être ondulée, notamment selon des vagues dont des sommets correspondent aux portions de la limite les plus rapprochées du bord de la vitre, dans les premières portions, et dont des creux correspondent aux portions de la limite les plus éloignées du bord de la vitre, dans les deuxièmes portions, le profil de chaque sommet étant plus aplati que le profil de chaque creux.

La distance séparant la limite du film et le bord de la vitre peut être alternativement variable selon une sinusoïde, un profil en dents de scie ou selon un profil crénelé.

La plus grande largeur de recouvrement du film par la bande d'adhésif dans les premières portions peut être sensiblement de 1 millimètre.L'invention sera désormais décrite dans des exemples en références aux dessins suivants :
- la figure 1 est une vue schématique en section partielle d'un vitrage selon l'invention monté sur un élément support,
- la figure 2 est une vue partielle en plan d'un vitrage selon l'invention,
- la figure 3 est une vue de détail de la figue 2 comme indiqué par le repère III de la figure 2,

Un bâtiment peut présenter des ouvertures qui nécessitent d'être recouvertes par un vitrage, comme par exemple des vitrines de magasins. Ces vitrages sont susceptibles de subir des actes de vandalisme tels que des jets d'objets, et sont donc pourvus d'un film de sécurité qui, sans constituer un blindage, ralenti l'entrée frauduleuse, évite le déboîtement de la vitre par rapport à son support, ou évite la projection de morceaux de verre sous l'effet du choc.

Selon l'invention, un vitrage 8 comporte une vitre 14 dont une face est revêtue d'un film de sécurité 20. Ce film de sécurité est un film de polyéthylène téréphtalate d'épaisseur environ 200 à 350 micromètres. Ce film 20 adhère sur la vitre 14 par l'intermédiaire d'un matériau adhésif.

Ce vitrage 8 est collé sur un élément support 10. Ce support 10, par exemple un cadre métallique, est fixé au bâtiment et comporte une paroi 12 qui délimite une ouverture de ce bâtiment.

Le vitrage 8 ferme intégralement ou partiellement l'ouverture. Une portion périphérique 16 de la vitre 14 recouvre le support 10 sur tout ou une partie seulement du pourtour de l'ouverture. Ladite portion 16 de la vitre entoure ladite ouverture de façon à être en face d'une zone 17 du support s'étendant à la périphérie de l'ouverture dans un plan parallèle au vitrage 8.

Le film 20 appliqué sur la vitre 14 est présent sur toute la surface intérieure de la vitre 14 en regard de l'ouverture, mais aussi autour de cette surface, afin de limiter une détérioration de la vitre à proximité de ses bords. On entend par surface intérieure de la vitre 14 la surface en regard du support 10.

Dans l'exemple représenté, une limite périphérique 22 du film est située entre la paroi 12 du support définissant l'ouverture et le bord périphérique 18 de la vitre de façon à ce qu'une ceinture périphérique 24 du film s'étende entre ladite portion périphérique 16 et ladite zone 17. La ceinture 24 est située en regard de la zone 17, sur une fraction interne 17A de la zone 17 adjacente à l'ouverture. La ceinture 24 s'étend sur une aire de la vitre couvrant une fraction interne 16A de la portion périphérique 16 adjacente à la surface de la vitre en regard de l'ouverture. Les fractions internes 16A et 17A s'étendent entre le niveau de la limite 22 et le niveau de la paroi 12 du support définissant l'ouverture.

Une fraction externe 16B de la portion périphérique 16 est adjacente au bord périphérique 18 de la vitre. La fraction externe 16B, forme une bordure libre de film, c'est-à-dire une bordure 16B de la vitre non recouverte par le film. A l'exception de la bordure 16B située entre le bord périphérique de la vitre et la limite périphérique du film, la vitre est recouverte par le film sur toute sa surface interne.

La fraction externe 16B, ou bordure 16B, et la fraction externe 17B s'étendent donc entre le niveau du bord 18 et le niveau de la limite 22.

Une bande d'adhésif 30, appelée aussi joint de colle ou bandeau de colle, est située entre la zone 17 et la portion 16 de la vitre 14 pour la fixation du vitrage sur l'élément support 10.

La bande d'adhésif 30 comporte un bord interne 30A côté film et un bord externe 30B côté bord périphérique 18 de la vitre. La bande d'adhésif 30 comporte un axe moyen 30C.

La bande d'adhésif 30 est aussi utilisée pour le collage du film 20, afin de préserver la cohésion de l'ensemble formé par la vitre et le film.

Selon l'invention, la limite périphérique 22 du film n'est pas rectiligne ou sensiblement rectiligne.

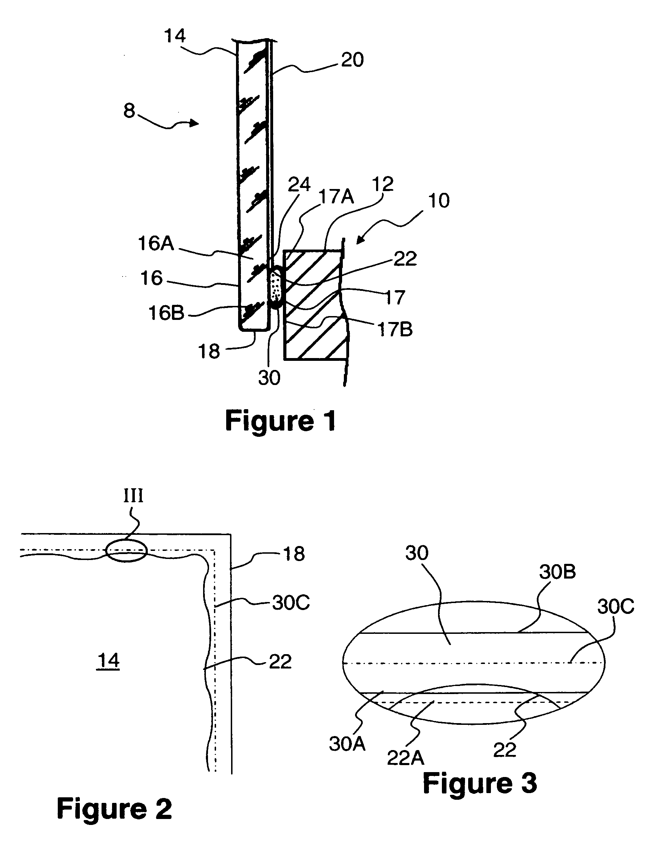

Dans l'exemple de réalisation représenté, la limite 22 est ondulée de façon à former une ligne moyenne 22A (figure 3) sensiblement parallèle au bord de la vitre sur la majorité du pourtour de la vitre. L'amplitude des ondulations est ici environ de 5 millimètres.

Dans un mode de réalisation non représenté, la limite 22 est découpée sensiblement selon une sinusoïde d'amplitude égale à 4 millimètres. L'amplitude de la sinusoïde est fonction de la largeur de l'émaillage périphérique du vitrage, l'émaillage étant habituellement destiné à rendre l'adhésif non visible de l'extérieur.

Dans le mode de réalisation représenté, la limite 22 est découpée selon un profil qui forme des vagues. Le sommet de chaque vague, qui correspond aux portions de la limite 22 les plus proches du bord de la vitre, a un profil plus aplati que le profil du creux de chaque vague, qui correspond aux portions de la limite 22 les plus éloignées du bord de la vitre.

Selon l'invention, la bande d'adhésif 30 recouvre le sommet vague et ne recouvre pas le creux des vagues. Chaque creux est donc libre de collage par rapport à la bande 30. Dans le mode de réalisation représenté, la bande d'adhésif 30 recouvre le sommet des vagues, sur sensiblement 1 millimètre. Ici, la bande d'adhésif 30 recouvre le sommet des vagues sensiblement sur un quart de l'amplitude des vagues et sur moins d'un quart de la largeur de la bande d'adhésif.

Les zones du film non recouvertes par la bande permettent d'éviter qu'il n'y ait une zone d'amorce de décollage de la bande 30 par rapport à la vitre, au bénéfice de la qualité de la fixation de la vitre 14 sur le support 10.

Ainsi, avantageusement, si le matériau adhésif ne suffit pas à la cohésion du film et de la vitre lors d'un impact sur la vitre, la bande d'adhésif 30 permet d'éviter le découpage de la vitre en renforçant l'effet du film au niveau de sa limite périphérique, sans pénaliser l'effet de la bande d'adhésif pour la fixation de la vitre sur le support 10.

Dans une première phase de montage du vitrage 8 sur le support 10 lié au bâtiment, la bande d'adhésif 30 est encollée de façon décalée par rapport à la ligne moyenne 22A de la limite périphérique 22 de puis le vitrage de sécurité est assemblée sur le support.

Il est a remarquer que l'axe moyen 30C de la bande d'adhésif 30 est décalé vers l'extérieur, c'est-à-dire vers le bord périphérique 18 de le vitre 14, tant par rapport à la ligne moyenne 22A que par rapport aux sommets des vagues du film.

La bande 30 est appliquée tant sur la fraction externe 16B de la portion périphérique 16 de la vitre 14 que sur le film 20, sur les premières portions périphériques du film.

Dans une deuxième phase de montage, la vitre est ensuite placée en regard de l'ouverture 12 et de la zone 17 de la paroi 10 puis la bande 30 est plaquée contre la fraction externe 17B pour la fixation de la vitre 14 sur la paroi 10.

La bande 30, pressée entre la vitre 14 et le support 10, adhère sur portion de la limite périphérique du film.

Typiquement, la bande d'adhésif 30 a une largeur d'environ 6 à 10 millimètres.

Dans le mode de réalisation représenté, la découpe non rectiligne de la limite du film est continue, c'est-à-dire sans angle vif, mais en variante, la limite du film est selon un profil en dents de scie, c'est-à-dire avec des découpes triangulaires qui forment des sommets et des creux. En variante, la limite du film est selon un profil crénelé formant des sommets et des creux.

Dans une variante de réalisation, tous les sommets ne coopèrent pas avec de l'adhésif, si bien que les deuxièmes portions comportent un train de sommets et de creux.

## Revendications

1. Agencement de fixation d'un vitrage (8) de sécurité pour bâtiment sur un support (10), le vitrage (8) comprenant une vitre (14) revêtue d'un film de sécurité (20) adhérant sur une face intérieure de la vitre, le vitrage (8) étant fixé par une bande adhésive (30) sur un élément support (10) lié au bâtiment, **caractérisé en ce qu'**une bordure (16B) à la périphérie de la vitre (14) est libre de film (20) de manière qu'une limite périphérique (22) du film soit située à distance du bord (18) de la vitre, la distance séparant le bord (18) de la vitre (14) et la limite (22) du film étant alternativement variable.

2. Agencement de fixation d'un vitrage selon la revendication précédente, **caractérisé en ce que** des premières portions périphériques du film (20) sont en contact avec la bande d'adhésif (30) et des secondes portions périphériques du film (20) soient libres par rapport à la bande d'adhésif (30).

3. Agencement de fixation d'un vitrage selon la revendication précédente, **caractérisé en ce que** les premières et secondes portions périphériques du film (30) sont alternativement adjacentes.

4. Agencement de fixation d'un vitrage selon l'une quelconque des revendications précédentes, **caractérisé en ce que** la limite (22) du film (20) est ondulée.

5. Agencement de fixation d'un vitrage selon l'une quelconque des revendications précédentes, **caractérisé en ce que** la limite (22) du film (20) est ondulée selon des vagues dont des sommets correspondent aux portions de la limite les plus rapprochées du bord (18) de la vitre (14), dans les premières portions, et dont des creux correspondent aux portions de la limite les plus éloignées du bord de la vitre, dans les deuxièmes portions, le profil de chaque sommet étant plus aplati que le profil de chaque creux.

6. Agencement de fixation d'un vitrage selon l'une quelconque des revendications 1 à 3, **caractérisé en ce que** la distance séparant la limite (22) du film (20) et le bord (18) de la vitre (14) est alternativement variable selon une sinusoïde.

7. Agencement de fixation d'un vitrage selon l'une quelconque des revendications 1 à 3, **caractérisé en ce que** la limite (22) du film (20) est alternativement variable selon un profil en dents de scie ou selon un profil crénelé.

8. Agencement de fixation d'un vitrage selon l'une quelconque des revendications précédentes, **caractérisé en ce que** la plus grande largeur de recouvrement du film (20) par la bande d'adhésif (30) dans les premières portions est sensiblement de 1 millimètre.

## Patentansprüche

1. Anordnung zur Befestigung eines Sicherheitsglasteils (8) für ein Gebäude auf einem Träger (10), wobei der Glasteil (8) eine Glasscheibe (14) umfasst, die mit einer Sicherheitsfolie (20) überzogen ist, die an einer Innenseite der Glasscheibe anhaftet, wobei der Glasteil (8) durch ein Haftband (30) an einem Trägerelement (10) befestigt ist, das mit dem Gebäude verbunden ist, **dadurch gekennzeichnet, dass** eine Umrandung (16B) an der Peripherie der Glasscheibe (14) frei von der Folie (20) ist, so dass eine Umfangsgrenze (22) der Folie in einem Abstand zum Rand (18) der Glasscheibe angeordnet ist, wobei der Abstand, der den Rand (18) der Glasscheibe (14) und die Grenze (22) der Folie trennt, alternativ variabel ist.

2. Anordnung zur Befestigung eines Glasteils nach dem vorhergehenden Anspruch, **dadurch gekennzeichnet, dass** erste Umfangsabschnitte der Folie (20) mit dem Haftband (30) in Kontakt sind und zweite Umfangsabschnitte der Folie (20) in Bezug zum Haftband (30) frei sind.

3. Anordnung zur Befestigung eines Glasteils nach dem vorhergehenden Anspruch, **dadurch gekennzeichnet, dass** die ersten und zweiten Umfangsabschnitte der Folie (30) alternativ aneinandergrenzend sind.

4. Anordnung zur Befestigung eines Glasteils nach einem der vorhergehenden Ansprüche, **dadurch gekennzeichnet, dass** die Grenze (22) der Folie (20) gewellt ist.

5. Anordnung zur Befestigung eines Glasteils nach einem der vorhergehenden Ansprüche, **dadurch gekennzeichnet, dass** die Grenze (22) der Folie (20) gemäß Wellen gewellt ist, deren Wellenspitzen den Abschnitten der Grenze, die dem Rand (18) der Glasscheibe (14) am nächsten sind, in den ersten Abschnitten entsprechen und deren Wellentäler den Abschnitten der Grenze, die am weitesten vom Rand der Glasscheibe entfernt sind, in den zweiten Abschnitten entsprechen, wobei das Profil jeder Wellenspitze mehr abgeflacht ist als das Profil jedes Wellentals.

6. Anordnung zur Befestigung eines Glasteils nach einem der Ansprüche 1 bis 3, **dadurch gekennzeichnet, dass** der Abstand zwischen der Grenze (22) der Folie (20) und dem Rand (18) der Glasscheibe (14) alternativ gemäß einer Sinuskurve variabel ist.

7. Anordnung zur Befestigung eines Glasteils nach einem der Ansprüche 1 bis 3, **dadurch gekennzeichnet, dass** die Grenze (22) der Folie (20) alternativ gemäß einem Sägezahnprofil oder gemäß einem Zackenprofil variabel ist.

8. Anordnung zur Befestigung eines Glasteils nach einem der vorhergehenden Ansprüche, **dadurch gekennzeichnet, dass** die größte Abdeckungsbreite der Folie (20) mit dem Haftband (30) in den ersten Abschnitten im Wesentlichen 1 Millimeter beträgt.

## Claims

1. Arrangement for attaching a safety glazing element (8) for a building to a mount (10), the glazing element (8) comprising a glass pane (14) lined with a safety film (20) adhering to an inner surface of the glass pane, the glazing element (8) being attached by an adhesive strip (30) to a mount element (10) connected to the building, **characterized in that** a border (16B) at the periphery of the glass pane (14) is free of film (20) such that a peripheral limit (22) of the film is located at a distance from the edge (18) of the glass pane, the distance between the edge (18) of the glass pane (14) and the limit (22) of the film varying alternately.

2. Arrangement for attaching a glazing element according to the preceding claim, **characterized in that** first peripheral portions of the film (20) are in contact with the strip of adhesive (30) and second peripheral portions of the film (20) are free with respect to the strip of adhesive (30).

3. Arrangement for attaching a glazing element according to the preceding claims, **characterized in that** the first and second peripheral portions of the film (30) are alternately adjacent.

4. Arrangement for attaching a glazing element according to any one of the preceding claims, **characterized in that** the limit (22) of the film (20) is undulating.

5. Arrangement for attaching a glazing element according to any one of the preceding claims, **characterized in that** the limit (22) of the film (20) is undulating in waves whose peaks correspond to the portions of the limit closest to the edge (18) of the glass pane (14) in the first portions, and whose troughs correspond to the portions of the limit furthest away from the edge of the glass pane in the second portions, the profile of each peak being flatter than the profile of each trough.

6. Arrangement for attaching a glazing element according to any one of Claims 1 to 3, **characterized in that** the distance between the limit (22) of the film (20) and the edge (18) of the glass pane (14) varies alternately following a sine wave.

7. Arrangement for attaching a glazing element according to any one of Claims 1 to 3, **characterized in that** the limit (22) of the film (20) varies alternately following a sawtooth profile or following a notched profile.

8. Arrangement for attaching a glazing element according to any one of the preceding claims, **characterized in that** the greatest width of the film (20) covered by the strip of adhesive (30) in the first portions is approximately 1 millimeter.
